(19) Europäisches Patentamt
European Patent Office
Office européen des brevets

(11) EP 2 382 247 B1

(12) # EUROPEAN PATENT SPECIFICATION

(45) Date of publication and mention of the grant of the patent:
**24.10.2012 Bulletin 2012/43**

(21) Application number: **10700121.6**

(22) Date of filing: **12.01.2010**

(51) Int Cl.:
***C08F 210/16*** *(2006.01)* ***C08F 2/14*** *(2006.01)*

(86) International application number:
**PCT/EP2010/050238**

(87) International publication number:
**WO 2010/084047 (29.07.2010 Gazette 2010/30)**

(54) **PE MIB SLURRY POLYMERIZATION**

PE-MIB-SCHLAMM-POLYMERISIERUNG

POLYMÉRISATION EN SUSPENSION DE PE ET DE MIB

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **23.01.2009 US 146938 P**

(43) Date of publication of application:
**02.11.2011 Bulletin 2011/44**

(73) Proprietor: **Evonik Oxeno GmbH**
**45772 Marl (DE)**

(72) Inventors:
- **GRASS, Michael**
  **45721 Haltern am See (DE)**
- **PETTIJOHN, Ted**
  **Magnolia, Texas 77354 (US)**
- **BUCHHOLZ, Stefan**
  **63456 Hanau (DE)**
- **ELLERMANN, Gerhard**
  **45768 Marl (DE)**
- **BJALAND, Anne Brit**
  **N-3916 Porsgrunn (NO)**
- **FOLLESTAD, Arild**
  **N-3910 Stathelle (NO)**
- **LUNDQUIST, Morten**
  **N-3916 Porsgrunn (NO)**

(56) References cited:
**EP-A2- 0 666 267**
**WO-A1-02/18046**
**WO-A1-2008/079483**
**WO-A1-2010/008515**
**DE-A1-102006 031 960**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 382 247 B1

Printed by Jouve, 75001 PARIS (FR)

## Description

BACKGROUND OF THE INVENTION

FIELD OF THE INVENTION

The present invention relates to a new, high productivity, process for the preparation of an alkene interpolymer comprising polymerizing at least one 3-substituted $C_{4-10}$ alkene and another $C_{2-8}$ alkene in a slurry reactor using a supported catalyst system comprising a single site catalyst. The invention also relates to interpolymers obtainable from the process.

DISCUSSION OF THE BACKGROUND

Alkenes, such as ethylene, are often copolymerized with comonomers in order to obtain polymers having particular properties. Thus it is common to copolymerize ethylene with comonomers such as 1-hexene or 1-octene in order to obtain a polymer having, for example, decreased density relative to ethylene homopolymer. Decreasing the density of the interpolymer generally impacts positively on a number of its mechanical properties, potentially making the polymer more useful in a number of end applications. Thus comonomers are generally used to tailor the properties of a polymer to suit its target application. There are vast numbers of commercially available ethylene interpolymers, e. g. comprising 1-hexene or 1-octene as comonomers.

A significant proportion of alkene polymer, e. g. polyethylene, is produced industrially using single site catalyst systems as the resulting polymers tend to be more homogenous thereby rendering their composition more controllable than polymers produced using other catalyst systems and more optimal for any particular application. When catalyst systems comprising a single site catalyst are used during an industrial alkene polymerization, the single site catalyst system is continuously introduced into the reactor system along with the appropriate monomers, whilst the desired polymer is continuously removed. The continuous addition of fresh catalyst system is necessary because when the desired polyalkene is removed from the reactor system, a certain amount of catalyst system is also removed. It is thus important to provide additional catalyst system in order to maintain the polymerization reaction.

A disadvantage of this manufacturing set up, however, is that the catalyst system that is removed from the reactor with the desired polymer is present within the polymer, closely mixed therewith. This means that the polymer must be subjected to purification for removal of the catalyst system, otherwise the catalyst system, typically as partially chemically modified catalyst system residues, will continue to remain within the polymer material during its further treatment and its use. In other words, the catalyst system is present in the polyalkene as an impurity.

The presence of catalyst system residues in polymers such as polyethylene is undesirable for a number of reasons, e. g.

- they make processing, e. g. to fibers or films difficult if the residues make particles of the same size or greater than the fiber or film thickness
- they reduce the performance of the polymer in its end use, e. g. it can reduce the optical performance of films made using the polymer by making visually observable inhomogeneities in the film, often called gels, specs or fish eyes
- they can render polymers unsuitable for use in applications where the level of impurities present therein is required to be below a certain standard, e. g. in food and/or medical applications
- they, through their content of transition metals, can act as accelerators for polymer degradation resulting eventually in discoloration and loss of mechanical strength.

A purification step to remove catalyst system residues from the polymer, usually called deashing, can be carried out by extracting and washing the polymer powder obtained from the reactor with an alcohol (e. g. isopropanol) optionally mixed with a hydrocarbon liquid or with water. Sometimes hydrocarbon liquids are used for the purpose, e. g. combined with suitable metal complexing agents such as acetylacetonate. It is clear, however, that such a process step is complex and that processes without such a purification step are cheaper and easier to operate than ones with deashing.

It is thus generally desirable to try to minimize the amount of catalyst system needed to make a given amount of polymer. This helps eliminate the need for a deashing step to overcome the above-mentioned problems in processing and use and also to decrease the production cost of the polymer through reduced catalyst system cost per ton polymer. It also minimizes any safety risks associated with the handling of catalytic materials. Additionally the ability to use a lesser amount of catalyst system per kg of final polymer in some cases allow production plants to increase their production rate without having to increase their reactor size.

There are a number of known methods that usually would increase catalyst system productivity (i. e. ton polymer/kg catalyst system) for a given catalyst system. These include increasing the residence time in the reactor,

increasing the polymerization temperature, increasing the concentration of monomer and/or the concentration of comonomer. All of these approaches, however, suffer from serious drawbacks.

Increasing the residence time can only be done by decreasing production rate, which is economically unfavorable, or by increasing polymer concentration in the reactor which may easily lead to fouling and/or lumps in the reactor and ultimately to a long stop for cleaning. Increasing the concentration of monomer has a negative effect on production economy by reducing the relative conversion of monomer. Increasing the concentration of comonomer increases the incorporation of comonomer and thus, in effect, leads to the production of a different interpolymer to the one targeted. Increasing the polymerization temperature from the usual operation temperature is probably the most common strategy employed to date, but as with increasing the residence time it can lead to reactor fouling and/or lumps in the reactor and again to a long stop for cleaning the reactor.

BRIEF DESCRIPTION OF DRAWINGS

Figure 1 is a plot of activity coefficient versus polyethylene density.
Figure 2 is a plot of comonomer content versus polyethylene density.

DETAILED DESCRIPTION OF THE INVENTION

In view of the above described drawbacks, there is a need for alternative polymerization processes for the preparation of alkene polymers and, in particular, alkene interpolymers that allow the amount of catalyst system needed to make a given amount of polymer to be minimized. Processes that allow the reaction to be carried out under conventional temperature and pressure conditions as well as in conventional reactors are especially desired.

It has now been surprisingly found that the catalytic activity of particulate catalyst systems comprising a single site catalyst in the slurry copolymerization of 1-alkenes such as ethylene is significantly increased by using a 3-substituted $C_{4-10}$ alkene as comonomer rather than a conventional non-substituted, linear $C_{4-10}$ alkene. As a result, a significantly lower amount of catalyst system can be used to manufacture a given amount of an interpolymer comprising the 3-substituted $C_{4-10}$ alkene (i.e. catalyst system productivity is significantly increased). Advantageously the major properties of a 1-alkene/3-substituted $C_{4-10}$ alkene interpolymer (e. g. $MFR_2$, density, melting point, Mw, Mn and molecular weight distribution) may be maintained on a comparable level to the properties of the conventional 1-alkene/non-substituted, linear $C_{4-10}$ alkene interpolymer. Surprisingly comparable properties can be achieved in some cases by using less 3-substituted $C_{4-10}$ alkene as comonomer rather than a conventional non-substituted, linear $C_{4-10}$ alkene comonomer. Thus, the process herein described offers an economically attractive approach for making interpolymers that can be used as substitutes for the ethylene/1-hexene and ethylene/1-octene copolymers commercially available.

Copolymers comprising ethylene and 3-methyl-but-1-ene have previously been described in the background art, e. g. in WO2008/006636, EP-A-1197501 and WO2008/003020. None of these documents, however, disclose the copolymerization of $C_{2-8}$ alkene and 3-methyl-but-1-ene with a particulate catalyst system comprising a single site catalyst. Accordingly, none of these documents disclose or suggest that the catalytic productivity of such a catalyst system in the slurry copolymerization of $C_{2-8}$ alkene such as ethylene may be significantly increased by utilizing 3-methyl-but-1-ene as comonomer, rather than conventional comonomers such as 1-hexene or 1-octene.

In a first embodiment, the present invention provides a process for the preparation of an alkene interpolymer comprising polymerizing at least one 3-substituted $C_{4-10}$ alkene and another $C_{2-8}$ alkene in a slurry polymerization using a particulate catalyst system comprising a single site catalyst.

In a second embodiment, the invention provides an alkene interpolymer obtainable using a process as described in this patent application.

In a third embodiment, the invention provides a method of increasing the productivity of a particulate catalyst system comprising a single site catalyst in a slurry polymerization comprising polymerizing at least one 3-substituted $C_{4-10}$ alkene with another $C_{2-8}$ alkene.

In a fourth embodiment, the invention provides the use of a 3-substituted $C_{4-10}$ alkene and a particulate catalyst system comprising a single site catalyst in the preparation of a $C_{2-8}$ alkene interpolymer by slurry polymerization.

Defmitions

All ranges mentioned herein include all values and subvalues between the lower limit and the higher limit of the range, including the end points of the range.

As used herein, the term "alkene interpolymer" refers to polymers comprising repeat units deriving from at least one 3-substituted $C_{4-10}$ alkene monomer and at least one other $C_{2-8}$ alkene. Preferred interpolymers are binary (i. e.

preferred interpolymers are copolymers) and comprise repeat units deriving from one type of 3-substituted $C_{4-10}$ alkene comonomer and one other type of $C_{2-8}$ alkene monomer. Other preferred interpolymers are ternary, e. g. they comprise repeat units deriving from one type of 3-substituted $C_{4-10}$ alkene comonomer and two types of $C_{2-8}$ alkene monomer. Particularly preferred interpolymers are copolymers. In preferred interpolymers at least 0.01 %wt, still more preferably at least 0.1 %wt, e. g. at least 0.5 %wt of each monomer is present based on the total weight of the interpolymer.

In contrast, the term "alkene homopolymer" as used herein refers to polymers which consist essentially of repeat units deriving from one type of $C_{2-8}$ alkene, e. g. ethylene. Homopolymers may, for example, comprise at least 99.9 %wt e. g. at least 99.99 %wt of repeat units deriving from one type of $C_{2-8}$ alkene based on the total weight of the polymer.

As used herein, the term 3-substituted $C_{4-10}$ alkene refers to an alkene having: (i) a backbone containing 4 to 10 carbon atoms, wherein the backbone is the longest carbon chain in the molecule that contains an alkene double bond, and (ii) a substituent (i. e. a group other than H) at the 3 position.

As used herein, the term "slurry polymerization" refers to a polymerization wherein the polymer forms as a solid in a liquid. The liquid may be a monomer of the polymer. In the latter case the polymerization is sometimes referred to as a bulk polymerization. The term slurry polymerization encompasses what is sometimes referred to in the art as supercritical polymerization, i. e. a polymerization wherein the polymer is a solid suspended in a fluid that is relatively close to its critical point, or if the fluid is a mixture, its pseudocritical point. A fluid may be considered relatively close to its critical point if its compressibility factor is less than double its critical compressibility factor or, in the case of a mixture, its pseudocritical compressibility factor.

As used herein, the term catalyst system refers to the total active entity that catalyses the polymerization reaction. Typically, the catalyst system is a coordination catalyst system comprising a transition metal compound (the active site precursor) and an activator (sometimes referred to as a cocatalyst) that is able to activate the transition metal compound. The catalyst system of the present invention preferably comprises an activator, at least one transition metal active site precursor and a particle building material that may be the activator or another material. Preferably, the particle building material is a carrier.

As used herein, the term "multisite catalyst system" refers to a catalyst system comprising at least two different active sites deriving from at least two chemically different active site precursors. A multisite catalyst system used in the present invention comprises at least one single site catalyst. Examples of a multisite catalyst system are one comprising two or three different metallocene active sites precursors or one comprising a Ziegler Natta active site and a metallocene active site. If there are only two active sites in the catalyst system, it can be called a dual site catalyst system. Particulate multisite catalyst systems may contain its different active sites in a single type of catalyst particle. Alternatively, each type of active site may each be contained in separate particles. If all the active sites of one type are contained in separate particles of one type, each type of particles may enter the reactor through its own inlet.

As used herein, the term "single site catalyst" refers to a catalyst having one type of active catalytic site. An example of a single site catalyst is a metallocene-containing catalyst. A typical Ziegler Natta (ZN) catalyst made from, e. g. impregnation of $TiCl_4$ into a carrier material, or chromium oxide (Philips) catalyst made from, e. g. impregnation of chromium oxide into silica, are not single site catalysts as they contain a mixture of different types of sites that give rise to polymer chains of different composition.

As used herein, the term "particulate catalyst system" means a catalyst system that when fed to the polymerization reactor or into the polymerization section, has its active sites or active site(s) precursors within solid particles, preferably porous particles. This is, in contrast, to catalyst systems with active sites, or precursor compounds, that are liquid or are dissolved in a liquid. It is generally presumed that when carrying out a polymerization using a particulate catalyst the particles of the catalyst will be broken down to catalyst fragments. These fragments are thereafter present within polymer particles whenever the polymerization is carried out in conditions whereby solid polymer forms. The particulate catalyst system may be prepolymerized during the catalyst preparation production process or later. The term particulate catalyst system also includes the situation wherein an active site or active site precursor compound contacts a carrier just before, or at the same time, as the active site or active site precursor compound contacts the monomer in the polymerization reactor.

As used herein, the term "polymerization section" refers to all of the polymerization reactors present in a multistage polymerization. The term also encompasses any prepolymerization reactors that are used.

As used herein, the term "multimodal" refers to a polymer comprising at least two components, which have been produced under different polymerization conditions and/or by using a multisite catalyst system in one stage and/or by using two or more different catalysts in a polymerization stage resulting in different (weight average) molecular weights and molecular weight distributions for the components. The prefix "multi" refers to the number of different components present in the polymer. Thus, for example, a polymer consisting of two components only is called "bimodal". The form of the molecular weight distribution curve, i. e. the appearance of the graph of the polymer weight fraction as a function of its molecular weight, of a multimodal polyalkene will show two or more maxima or at least be distinctly broadened in comparison with the curves for the individual components. In addition, multimodality may show as a difference in melting

or crystallization temperature of components.

In contrast, a polymer comprising one component produced under constant polymerization conditions is referred to herein as unimodal.

$C_{2-8}$ Alkene

In order to produce an interpolymer the $C_{2-8}$ alkene should be a different alkene to the alkene used as the 3-substituted $C_{4-10}$ alkene. One or more (e. g. two or three) $C_{2-8}$ alkenes may be used. Preferably, however, one or two, e. g. one, $C_{2-8}$ alkene is used.

Preferably, the $C_{2-8}$ alkene is a monoalkene. Still more preferably the $C_{2-8}$ alkene is a terminal alkene. In other words, the $C_{2-8}$ alkene is preferably unsaturated at carbon numbers 1 and 2. Preferred $C_{2-8}$ alkene are thus $C_{2-8}$ alk-1-enes.

The $C_{2-8}$ alkene is preferably a linear alkene. Still more preferably, the $C_{2-8}$ alkene is an unsubstituted $C_{2-8}$ alkene.

Representative examples of $C_{2-8}$ alkenes that are suitable for use in the process of the present invention include ethylene, propylene, 1-butene, 1-pentene, 4-methyl-1-pentene, 1-hexene and 1-octene. Preferably, the $C_{2-8}$ alkene is selected from ethylene, propylene, 1-butene, 4-methyl-1-pentene or mixtures therefore. Particularly preferably, the $C_{2-8}$ alkene is ethylene or propylene, e.g. ethylene.

$C_{2-8}$ alkenes for use in the present invention are commercially available. Alternatively, ethylene, propylene and but-1-ene may be prepared by thermal cracking. Higher linear olefins are available from catalytic oligomerization of ethylene or by Fischer Tropsch synthesis.

Substituted $C_{4-10}$ alkene

It has been found that the slurry copolymerization of the above-described $C_{2-8}$ alkene with 3-substituted $C_{4-10}$ alkene with a particulate, single site catalyst system occurs with unexpectedly high efficiency. It has also been found that to provide a polymer of any given density, less 3-substituted $C_{4-10}$ alkene needs to be included therein than 1-hexene or 1-octene. This is advantageous as the cost of comonomers such as 1-hexene, 1-octene or 3-substituted $C_{4-10}$ alkene is much greater than the cost of ethylene or propylene.

Preferably, the substituent present at carbon 3 of the 3-substituted $C_{4-10}$ alkene is a $C_{1-6}$ alkyl group. The alkyl group may be substituted by non-hydrocarbyl substituents or unsubstituted. Representative examples of non-hydrocarbyl substituents that may be present on the alkyl group include F and Cl. Preferably, however, the $C_{1-6}$ alkyl group is unsubstituted. Particularly preferably, the substituent group present at carbon 3 is a $C_{1-3}$ alkyl group such as methyl, ethyl or iso-propyl. Methyl is an especially preferred substituent group.

Preferably, the 3-substituted $C_{4-10}$ alkene is solely substituted at carbon 3. If, however, a substituent is present at another position it is preferably a $C_{1-6}$ alkyl group as described above for the substituent present at carbon 3.

The 3-substituted $C_{4-10}$ alkene is preferably a monoalkene. Still more preferably, the 3-substituted $C_{4-10}$ alkene is a terminal alkene. In other words, the 3-substituted $C_{4-10}$ alkene is preferably unsaturated at carbon numbers 1 and 2. Preferred 3-substituted $C_{4-10}$ alkenes are thus 3-substituted $C_{4-10}$ alk-1-enes.

Preferred 3-substituted $C_{4-10}$ alkenes for use in the process of the present invention are those of formula (I):

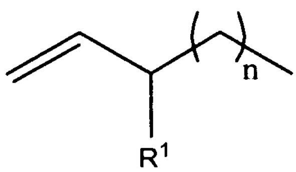

(I)

wherein $R^1$ is a substituted or unsubstituted, preferably unsubstituted, $C_{1-6}$ alkyl group and n is an integer between 0 and 6.

In preferred compounds of formula (I) $R^1$ is methyl or ethyl, e. g. methyl. In further preferred compounds of formula (I) n is 0, 1 or 2, still more preferably 0 or 1, e. g. 0.

Representative examples of compounds of formula (I) that can be used in the process of the present invention include 3-methyl-1-butene, 3-methyl-1-pentene, 3-methyl-1-hexene, 3-ethyl-1-pentene and 3-ethyl-1-hexene. A particularly preferred 3-substituted $C_{4-10}$ alkene for use in the process of the present invention is 3-methyl-1-butene.

3-substituted $C_{4-10}$ alkenes for use in the invention are commercially available, e. g from Sigma-Aldrich. 3-methyl-1-butene can be made, e. g. according to WO2008/006633.

Catalyst system

As described above, it has been surprisingly found that the copolymerization of a 3-substituted $C_{4-10}$ alkene, e. g. 3-methyl-1-butene, with a $C_{2-8}$ alkene, e. g. ethylene, occurs with higher efficiency than the corresponding copolymerization with conventional linear $C_{4-10}$ alkenes. This effect has specifically been observed with particulate catalyst systems comprising a single site catalyst.

Catalyst morphology and carrier

The catalyst system used in the process of the present invention is in particulate form. Preferably, the catalyst system is in the form of particles having a weight average particle size of 1 to 250 microns, preferably 4 to 150 microns. Preferably, the catalyst system is in the form of a free-flowing powder.

The catalyst system used in the process of the present invention comprises a single site catalyst, preferably a metallocene-containing catalyst. Such catalyst systems are well known in the art, e. g. from WO98/02246, the contents of which are hereby incorporated herein by reference. The catalyst system particles may be synthesized by producing the solid particles from liquid starting material components without a separate impregnation step or they may be made by first producing a solid particle and then impregnating the active site precursors into it.

The catalyst system preferably comprises a carrier, an activator and at least one transition metal active site precursor (e. g. a metallocene). The activator is preferably aluminoxane, borane or borate but preferably is aluminoxane. Preferably, the active site precursor is a metallocene.

Suitable carrier materials for use in the catalyst system are well known in the art. The carrier material is preferably an inorganic material, e. g. an oxide of silicon and/or of aluminium or $MgCl_2$. Preferably, the carrier is an oxide of silicon and/or aluminium. Still more preferably the carrier is silica.

Preferably, the carrier particles have an average particle size of 1 to 500 microns, preferably 3 to 250 microns, e. g. 10 to 150 microns. Particles of appropriate size can be obtained by sieving to eliminate oversized particles. Sieving can be carried out before, during or after the preparation of the catalyst system. Preferably, the particles are spherical. The surface area of the carrier is preferably in the range 5 to 1200 $m^2/g$, more preferably 50 to 600 $m^2/g$. The pore volume of the carrier is preferably in the range 0.1 to 5 $cm^3/g$, preferably 0.5-3.5 $cm^3/g$.

Preferably, the carrier is dehydrated prior to use. Particularly preferably the carrier is heated at 100 to 800 °C, more preferably 150 to 700 °C, e. g. at about 250 °C prior to use. Preferably, dehydration is carried out for 0.5-12 hours.

Carriers that are suitable for the preparation of the catalyst systems herein described are commercially available, e. g. from Grace and PQ Corporation.

Activator

Aluminoxane is preferably present in the catalyst system as activator. The aluminoxane is preferably oligomeric. Still more preferably the aluminoxane is a cage-like (e. g. multicyclic) molecule, e. g. with an approximate formula $(AlR_{1.4}0_{0.8})_n$ where n is 10-60 and R is an alkyl group, e. g. a $C_{1-20}$ alkyl group. In preferred aluminoxanes R is a $C_{1-8}$ alkyl group, e. g. methyl. Methylaluminoxane (MAO) is a mixture of oligomers with a distribution of molecular weights, preferably with an average molecular weight of 700 to 1500. MAO is a preferred aluminoxane for use in the catalyst system.

The aluminoxane may be modified with an aluminium alkyl or aluminium alkoxy compound. Especially preferred modifying compounds are aluminium alkyls, in particular, aluminium trialkyls such as trimethyl aluminium, triethyl aluminium and tri isobutyl aluminium. Trimethyl aluminium is particularly preferred.

Aluminoxanes, such as MAO, that are suitable for the preparation of the catalyst systems herein described are commercially available, e. g. from Albemarle and Chemtura.

It is also possible to generate the activator in situ, e. g. by slow hydrolysis of trimethylaluminium inside the pores of a carrier. This process is well known in the art.

Alternatively, activators based on boron may be used. Preferred boron based activators are those wherein the boron is attached to at least 3 fluorinated phenyl rings as described in EP 520732.

Alternatively, an activating, solid surface as described in US 7,312,283 may be used as a carrier. These are solid, particulate inorganic oxides of high porosity which exhibit Lewis acid or Bronsted acidic behavior and which have been treated with an electron-withdrawing component, typically an anion, and which have then been calcined.

Transition metal active site precursor

Generally, the metal of the transition metal precursors are 16-electron complexes, although they may sometimes comprise fewer electrons, e. g. complexes of Ti, Zr or Hf.

The active site transition metal precursor is preferably a metallocene.

The metallocene preferably comprises a metal coordinated by one or more η-bonding ligands. The metal is preferably Zr, Hf or Ti, especially Zr or Hf. The η-bonding ligand is preferably a $\eta^5$-cyclic ligand, i.e. a homo or heterocyclic cyclopentadienyl group optionally with fused or pendant substituents.

The metallocene preferably has the formula:

$$(Cp)_m L_n M X_p$$

wherein Cp is an unsubstituted or substituted cyclopentadienyl group, an unsubstituted or substituted indenyl or an unsubstituted or substituted fluorenyl (e. g. an unsubstituted or substituted cyclopentadienyl group);
the optional one or more substituent(s) being independently selected from halogen (e. g. Cl, F, Br, I), hydrocarbyl (e. g. $C_{1-20}$ alkyl, $C_{2-20}$ alkenyl, $C_{2-20}$ alkynyl, $C_{6-20}$ aryl or $C_{6-20}$ arylalkyl), $C_{3-12}$ cycloalkyl which contains 1, 2, 3 or 4 heteroatom (s) in the ring moiety, $C_{6-20}$ heteroaryl, $C_{1-20}$ haloalkyl, $-SiR''_3$, $-OSiR''_3$, -SR", $-PR''_2$ or $-NR''_2$,
each R" is independently a H or hydrocarbyl, e.g. $C_{1-20}$ alkyl, $C_{2-20}$ alkenyl, $C_{2-20}$ alkynyl, $C_{6-20}$ aryl or $C_{6-20}$ arylalkyl; or in the case of $-NR''_2$, the two R" can form a ring, e. g. a 5 or 6 membered ring, together with the nitrogen atom to which they are attached;
L is a bridge of 1-7 atoms, e. g. a bridge of 1-4 C atoms and 0-4 heteroatoms, wherein the heteroatom(s) can be, e. g. Si, Ge and/or O atom(s), wherein each of the bridge atoms may independently bear substituents (e. g. $C_{1-20}$ alkyl, tri ($C_{1-20}$ alkyl)silyl, tri($C_{1-20}$alkyl)siloxy or $C_{6-20}$ aryl substituents); or a bridge of 1-3, e. g. one or two, heteroatoms, such as Si, Ge and/or O atom(s), e. g. $-SiR'''_2$, wherein each R"' is independently $C_{1-20}$ alkyl, $C_{6-20}$ aryl or tri($C_{1-20}$alkyl)silyl residue such as trimethylsilyl;
M is a transition metal of Group 3 to 10, preferably of Group 4 to 6, such as Group 4, e. g. titanium, zirconium or hafnium, preferably hafnium,
each X is independently a sigma ligand such as halogen (e. g. Cl, F, Br, I), hydrogen, $C_{1-20}$ alkyl, $C_{1-20}$ alkoxy, $C_{2-20}$ alkenyl, $C_{2-20}$ alkynyl, $C_{3-12}$ cycloalkyl, $C_{6-20}$ aryl, $C_{6-20}$ aryloxy, $C_{7-20}$ arylalkyl, $C_{7-20}$ arylalkenyl, -SR", $-PR''_3$, $-SiR''_3$, $-OSiR''_3$, $-NR''_2$, or $CH_2$-Y wherein Y is $C_{6-20}$ aryl, $C_{6-20}$ heteroaryl, $C_{1-20}$ alkoxy, $C_{6-20}$ aryloxy, $-NR''_2$, -SR", $-PR''_3$, $-SiR''_3$ or $-OSiR''_3$; alternatively, two X ligands are bridged to provide a bidentate ligand on the metal, e. g. 1,3-pentadiene;
each of the above mentioned ring moieties alone or as part of another moiety as the substituent for Cp, X, R" or R"' can be further substituted, e. g. with $C_{1-20}$ alkyl which may contain Si and/or O atom(s);
m is 1, 2 or 3, preferably 1 or 2, more preferably 2;
n is 0, 1 or 2, preferably 0 or 1;
p is 1, 2 or 3 (e. g. 2 or 3); and
the sum of m + p is equal to the valence of M (e. g. when M is Zr, Hf or Ti, the sum of m+ p should be 4).

Preferably, Cp is a cyclopentadienyl group, especially a substituted cyclopentadienyl group. Preferred substituents on Cp groups, including cyclopentadienyl, are $C_{1-20}$ alkyl. Preferably, the cyclopentadienyl group is substituted with a straight chain $C_{1-6}$ alkyl group, e. g. n-butyl.

If present L is preferably a methylene, ethylene or silyl bridge whereby the silyl can be substituted as defined above, e. g. a (dimethyl)Si=, (methylphenyl)Si= or (trimethylsilylmethyl)Si=; n is 1; m is 2 and p is 2. When L is a silyl bridge, R" is preferably other than H. More preferably, however, n is 0.

X is preferably H, halogen, $C_{1-20}$ alkyl or $C_{6-20}$ aryl. When X are halogen atoms, they are preferably selected from fluorine, chlorine, bromine and iodine. Most preferably, X is chlorine. When X is a $C_{1-20}$ alkyl group, it is preferably a straight chain or branched $C_{1-8}$ alkyl group, e. g. a methyl, ethyl, n-propyl, n-hexyl or n-octyl group. When X is an $C_{6-20}$ aryl group, it is preferably phenyl or benzyl. In preferred metallocenes X is a halogen, e. g. chlorine.

Suitable metallocene compounds include:

bis(cyclopentadienyl)metal dihalides, bis(cyclopentadienyl)metal hydridohalides, bis(cyclopentadienyl)metal monoalkyl monohalides, bis(cyclopentadienyl)metal dialkyls and bis(indenyl)metal dihalides wherein the metal is zirconium or hafnium, preferably hafnium, halide groups are preferably chlorine and alkyl groups are preferably $C_{1-6}$ alkyl.

Representative examples of metallocenes include:

bis(cyclopentadienyl)$ZrCl_2$, bis(cyclopentadienyl)$HfCl_2$, bis(cyclopentadienyl)$ZrMe_2$, bis(cyclopentadienyl)$HfMe_2$, bis(cyclopentadienyl)Zr(H)Cl, bis(cyclopentadienyl)Hf(H)Cl, bis(n-butylcyclopentadienyl)$ZrCl_2$, bis(n-butylcyclopentadienyl)$HfCl_2$, bis(n-butylcyclopentadienyl)$ZrMe_2$, bis(n-butylcyclopentadienyl)$HfMe_2$, bis(n-butylcyclopentadienyl) Zr(H)Cl, bis(n-butylcyclopentadienyl)Hf(H)Cl, bis(pentamethylcyclopentadienyl)$ZrCl_2$, bis(pentamethylcyclopentadienyl)$HfCl_2$, bis-(1,3-dimethylcyclopentadienyl)$ZrCl_2$, bis(4,5,6,7-tetrahydro-1-indenyl)$ZrCl_2$ and ethylene-[bis (4,5,6,7-tetrahydro-1-indenyl)$ZrCl_2$.

Alternatively, the metallocene may be a constrained geometry catalyst (CGC). These comprise a transition metal, M (preferably Ti) with one eta- cyclopentadienyl ligand and two X groups, i. e. be of the formula $CpMX_2$, wherein X is as defined above and the cyclopentadienyl has a -$Si(R'')_2N(R'')$- substituent wherein R" is as defined above and the N atom is bonded directly to M. Preferably, R" is $C_{1-20}$ alkyl. Preferably, the cyclopentadienyl ligand is additionally substituted with 1 to 4, preferably 4, $C_{1-20}$ alkyl groups. Examples of metallocenes of this type are described in US 2003/0022998, the contents of which are hereby incorporated by reference.

The preparation of metallocenes can be carried out according to, or analogously to, the methods known from the literature and is within the skills of a polymer chemist.

Other types of single site precursor compounds are described in: G.J.P. Britovsek et al.: The Search for New-Generation Olefin Polymerization Catalysts: Life beyond Metallocenes, Angew. Chemie Int. Ed., 38 (1999), p. 428.

H. Makio et al.: FI Catalysts: A New Family of High Performance Catalysts for Olefin Polymerization, Advanced Synthesis and Catalysis, 344 (2002), p. 477. Dupont-Brookhart type active site precursors are disclosed in US5880241.

Catalyst system preparation

To form the catalyst systems for use in the present invention, the carrier, e. g. silica, is preferably dehydrated (e. g. by heating). The further preparation of the catalyst system is preferably undertaken under anhydrous conditions and in the absence of oxygen and water. The dehydrated carrier is then preferably added to a liquid medium to form a slurry. The liquid medium is preferably a hydrocarbon comprising 5 to 20 carbon atoms, e. g. pentane, isopentane, hexane, isohexane, heptane, octane, nonane, decane, dodecane, cyclopentane, cyclohexane, cycloheptane, toluene and mixtures thereof. Isomers of any of the aforementioned hydrocarbons may also be used. The volume of the liquid medium is preferably sufficient to fill the pores of the carrier, and more preferably to form a slurry of the carrier particles. Typically the volume of the liquid medium will be 2 to 15 times the pore volume of the support as measured by nitrogen adsorption method (BET method). This helps to ensure that a uniform distribution of metals on the surface and pores of the carrier is achieved.

In a separate vessel, the metallocene may be mixed with aluminoxane in a solvent. The solvent may be a hydrocarbon comprising 5 to 20 carbon atoms, e. g. toluene, xylene, cyclopentane, cyclohexane, cycloheptane, pentane, isopentane, hexane, isohexane, heptane, octane or mixtures thereof. Preferably, toluene is used. Preferably, the metallocene is simply added to the toluene solution in which the aluminoxane is present in its commercially available form. The volume of the solvent is preferably about equal to or less than the pore volume of the carrier. The resulting mixture is then mixed with the carrier, preferably at a temperature in the range 0 to 60 °C. Impregnation of the metallocene and aluminoxane into the carrier is preferably achieved using agitation. Agitation is preferably carried out for 15 minutes to 12 hours. Alternatively, the carrier may be impregnated with aluminoxane first, followed by metallocene. Simultaneous impregnation with aluminoxane and metallocene is, however, preferred.

The solvent and/or liquid medium are typically removed by filtering and/or decanting and/or evaporation, preferably by evaporation only. Optionally, the impregnated particles are washed with a hydrocarbon solvent to remove extractable metallocene and/or aluminoxane. Removal of the solvent and liquid medium from the pores of the carrier material is preferably achieved by heating and/or purging with an inert gas. Removal of the solvent and liquid medium is preferably carried out under vacuum. Preferably, the temperature of any heating step is below 80 °C, e. g. heating may be carried out at 40 - 70 °C. Typically heating may be carried out for 2 to 24 hours. Alternatively, the catalyst system particles may remain in a slurry form and used as such when fed to the polymerization reactor, however, this is not preferred.

The metallocene and aluminoxane loading on the carrier is such that the amount of aluminoxane (dry), on the carrier ranges from 10 to 90 %wt, preferably from 15 to 50 %wt, still more preferably from 20 to 40 %wt based on the total weight of dry solid catalyst. The amount of transition metal on the carrier is preferably 0.005-0.2 mmol/g of dry solid catalyst, still more preferably 0.01-0.1 mmol/g of dry solid catalyst.

The molar ratio of Al:transition metal in the solid catalyst system may range from 25 to 10,000, usually within the range of from 50 to 980 but preferably from 70 to 500 and most preferably from 100 to 350.

Particulate catalyst system can also be made using a boron activator instead of aluminoxane activator, e. g. as described in US 6,787,608. In its example 1, an inorganic carrier is dehydrated, then surface modified by alkylaluminum impregnation, washed to remove excess alkylaluminum and dried. Subsequently the carrier is impregnated with an about equimolar solution of boron activator and trialkylaluminum, then mixed with a metallocene precursor, specifically a CGC metallocene, then filtered, washed and dried.

Also US 6,350,829 describes the use of boron activator, but using mainly bis metallocene complexes as active site precursors. The dried metal alkyl-treated carrier is coimpregnated with a mixture of the metallocene and the boron activator (without additional metal alkyl), and then the volatiles removed.

The support material may also be mixed with the metallocene solution just before polymerization. US 7,312,283 describes such a process. A porous metal oxide particulate material is impregnated with ammonium sulphate dissolved

in water, and then calcined in dry air, kept under nitrogen, then mixed with a hydrocarbon liquid. Separately a solution was prepared by mixing metallocene with 1-alkene, and then mixing in metal alkyl. Polymerization was done in a continuous slurry reactor, into which both the sulphated particulate metal oxide and the metallocene solution were fed continuously, in such a way that the two feed streams were mixed immediately before entering the reactor. Thus the treated metal oxide functions both as an activator as well as a catalyst support.

Alternative methods of supporting single site catalysts via a preformed carrier and aluminoxane are given in EP 279 863, WO 93/23 439, EP 793 678, WO 96/00 245, WO 97/29 134

Alternative methods of supporting single site catalysts via preformed carriers and boron activators are given in WO 91/09 882 and WO 97/31 038.

Methods of obtaining particulate catalyst systems without employing preformed carriers are given in EP 810 344 and EP 792 297.

Multisite catalyst systems

Multisite catalyst systems for use in the polymerization comprise a single site catalyst.

The multisite catalyst system may be hybrids from two (or more) different catalyst families. For instance, Ziegler Natta and single site catalytic sites may be used together, e. g. by impregnating metallocene site precursor and activator for the metallocene into the pores of a particulate Ziegler Natta catalyst. Alternatively, chromium oxide may be used together with a metallocene, e. g. by impregnating, under inert conditions, metallocene site precursor and activator for the metallocene into the pores of a particulate, thermally activated chromium oxide catalyst.

Single site catalysts are particularly useful in the preparation of multisite catalyst systems. A preferred multisite catalyst system is one comprising two metallocenes, e. g. one having a tendency to make higher molecular weight polymer and one having a tendency to make lower molecular weight polymer or one having a tendency to incorporate comonomer and one having a lesser tendency to do so. The two metallocenes may, for instance, be isomeric metallocenes in about the same ratio as made in their synthesis. Preferably, however, the multisite catalyst system comprises one active site making a polymer component of both lower molecular weight and lower comonomer incorporation than another site. Dual site catalyst systems (multisite catalyst systems with two sites) containing such sites are particularly preferred.

High catalyst activity/productivity

An important feature of the process of the present invention is that the above-described catalyst system has a high activity coefficient in the copolymerization of $C_{2-8}$ alkene and 3-substituted $C_{4-10}$ alkene at a polymerization temperature of about 80 °C. Preferably, the activity coefficient of the catalyst system is at least 160 g polyalkene/(g cat, h, bar), still more preferably the activity coefficient of the catalyst system is at least 180 g polyalkene/(g cat, h, bar), e. g. at least 200 g polyalkene/(g cat, h, bar). There is no upper limit on the activity coefficient, e. g. it may be as high as 5000 g polyalkene/(g cat, h, bar).

The high catalytic productivity of the process of the present invention has many advantages. For instance, it decreases the production cost of the polymer and minimizes any safety risks associated with the handling of catalytic materials as less are required. Additionally the ability to use a lesser amount of catalyst system per kg of final polymer in most cases allows production plants to increase their production output without having to increase their reactor size or catalyst materials feed systems.

Polymerization and downstream process

Polymerization processes

The slurry polymerization reaction is preferably carried out in conventional circulating loop or stirred tank reactors. Suitable polyalkene processes are, for example, Hostalen staged (where catalyst system and polymer sequentially pass from reactor to reactor) tank slurry reactor process for polyethylene by LyondellBasell, LyondellBasell-Maruzen staged tank slurry reactor process for polyethylene, Mitsui staged tank slurry reactor process for polyethylene by Mitsui, CPC single loop slurry polyethylene process by Chevron Phillips, Innovene staged loop slurry process by Ineos, part of the Borstar staged slurry loop and gas phase reactor process for polyethylene by Borealis and part of Spheripol polypropylene staged slurry (bulk) loop and gas phase process by LyondellBasell. The high activity of the catalyst systems hereinbefore described allow for efficient slurry polymerization to be carried out. The productivity of the total catalyst system is preferably equal to the productivity of the solid catalyst system. Preferably, the productivity achieved based on the total (dry) weight of the catalyst system in the polymerization process is at least 1 ton polymer/kg of catalyst system. Still more preferably the productivity of the total catalyst system is at least 2 ton polymer/kg catalyst system, e. g. at least 3 ton polymer/kg catalyst system. The upper limit is not critical but might be in the order of 30 ton polymer/kg

catalyst system. Advantageously, the process typically proceeds without reactor fouling.

Slurry reactor parameters and operation

The conditions for carrying out slurry polymerizations are well established in the art. The reaction temperature is preferably in the range 30 to 120 °C, e. g. 50 to 100 °C. The reaction pressure will preferably be in the range 1 to 100 bar, e. g. 10 to 70 bar. The residence time in the reactor or reactors (i. e. in the polymerization section) is preferably in the range 0.5 to 6 hours, e. g. 1 to 4 hours. The diluent used will generally be an aliphatic hydrocarbon having a boiling point in the range -70 to 100 °C. Preferred diluents include n-hexane, isobutane and propane, especially isobutane.

Hydrogen is also preferably fed into the reactor to function as a molecular weight regulator. Typically, and especially for catalysts with Group 4 metallocenes with at least one cyclopentadienyl group, the molar ratio between the feed of hydrogen and the feed of the $C_{2-8}$ alkene into the reactor system is 1 : 10 000 - 1 : 500.

Preferably, the polymerization reaction is carried out as a continuous or semi-continuous process. Thus the monomers, diluent and hydrogen are preferably fed continuously or semi-continuously into the reactor. Preferably, the catalyst system is also fed continuously or semi-continuously into the reactor. Still more preferably polymer slurry is continuously or semi-continuously removed from the reactor. By semi-continuously is meant that addition and/or removal is controlled so they occur at relatively short time intervals compared to the polymer residence time in the reactor, e.g. between 20 seconds to 2 minutes, for at least 75 % (e. g. 100 %) of the duration of the polymerization.

Thus in a preferred process the catalyst system is preferably injected into the reactor at a rate equal to its rate of removal from the reactor. An advantage of the invention herein described, however, is that because less catalyst system can be used per kg of polymer produced, less catalyst system is removed from the reactor along with polymer. The interpolymers obtained directly from the polymerization therefore comprise less impurities deriving from the catalyst system.

When used with a 3-substituted $C_{4-10}$ alkene comonomer, the particulate catalyst system herein described gives a very high activity, enabling a high productivity (ton polymer/kg catalyst system). Consequently relatively low concentrations of catalyst system are required in the reactor. Preferably, the concentration of catalyst system in the slurry polymerization is less than 0.3 kg/ton slurry, still more preferably less than 0.2 kg/ton slurry, e. g. less than 0.1 kg/ton slurry. Preferably, the concentration of catalyst system is at least 0.01 kg/ton slurry. Preferably, the concentration of polymer present in the reactor during polymerization is in the range 15 to 55 %wt based on total slurry, more preferably 25 to 50 %wt based on total slurry. Such a concentration can be maintained by controlling the rate of addition of monomer, the rate of addition of diluent and catalyst system and, to some extent, the rate of removal of polymer slurry from the slurry reactor. For bulk polymerization of propylene, the controlling parameters for polymer concentration are the propylene and catalyst system feed rates.

Staged polymerization including a gas phase

The above-described slurry polymerization may be combined with one or more further polymerizations, i. e. in a multistage process. Thus, for example, two slurry polymerizations can be carried out in sequence (e. g. in Mitsui, Hostalen or Innovene slurry processes) or a slurry polymerization can be followed by a gas phase polymerization (e. g. in Borstar or Spheripol processes). Alternatively, a slurry polymerization may be preceded by a gas phase polymerization.

When a polymer is produced in a multistage process, the reactors may be in parallel or in series but arrangement in series is preferred. If the polymer components are produced in a parallel arrangement, the powders are preferably mixed and extruded for homogenization.

When a polymer is produced in a sequential multistage process, using reactors coupled in series and using different conditions in each reactor, the polymer components produced in the different reactors will each have their own molecular weight distribution and weight average molecular weight. When the molecular weight distribution curve of such a polymer is recorded, the individual curves from these fractions are superimposed into the molecular weight distribution curve for the total resulting polymer product, usually yielding a curve with two or more distinct maxima. The product of a multistage polymerization is usually a multimodal polyalkene.

If a gas phase polymerization is additionally employed then the conditions are preferably as follows:

- the temperature is within the range of 50 - 130 °C, preferably 60 - 115 °C
- the pressure is within the range of 10 - 60 bar, preferably 10 - 40 bar
- hydrogen would be added for controlling the molar mass in a manner known in the art (e. g. at a concentration of 5 - 1000 ppm mol)
- the residence time is typically 0.5 to 3 hours.

The gas used will commonly be a non-reactive gas such as nitrogen together with monomer (e. g. ethylene)

and optionally a 3-substituted $C_{4-10}$ alkene comonomer. Alternatively, another comonomer may be added with the 3-substituted $C_{4-10}$ alkene comonomer. Alternatively, no comonomer may be added. Additionally a low boiling point hydrocarbon such as propane is preferably added.

When no comonomer is added in the gas phase polymerization, the polymer component from the gas phase polymerization is an alkene homopolymer. The polymerization may be conducted in a manner known in the art, such as in a bed fluidized by circulating gas acting as a coolant, monomer supply and agitation agent or in a mechanically agitated fluidized bed or in a circulating bed. The polymer product may be recovered from gas phase reactors using techniques conventional in the art.

Staged processes for polyethylene preferably produce a combination of a major component A of lower molecular weight and lower (especially preferred is zero when producing final products of density higher than 940 g/dm$^3$) comonomer content and one major component B of higher molecular weight and higher comonomer content. Component A is preferably made in a reactor A' wherein the hydrogen level is higher and the comonomer level lower than in the reactor B' where component B is made. If reactor A' precedes B', it is preferred that hydrogen should be stripped off from the polymer flow from A' to B'. If reactor B' precedes A', then preferably no extra comonomer is added to reactor B', and it is preferred to remove a significant part of the non converted comonomer from the polymer flow from B' to A'. It is also preferred that the 3-substituted $C_{4-10}$ alkene is used in the reactor where the polymer with highest incorporation of comonomer is produced, and especially preferred in all the reactors of the process where comonomer is used.

When a two stage polymerization is utilized, the lower molecular weight polymer component is preferably produced in the slurry reactor as described in detail above. The higher molecular weight component may be produced in another slurry reactor or in a gas phase reactor. The higher molecular weight component is typically produced using a lower hydrogen/monomer feed. The reactors may be connected in parallel or in series, but preferably they are connected in series. Preferably, the same catalyst system is used in both reactors. Preferably, the catalyst system is only fed into the first reactor and flows from this, along with polymer, to the next reactor(s) in sequence. The higher molecular weight component may be an interpolymer (e. g. copolymer) or homopolymer. Preferably, it is a copolymer, and more preferably, it is a copolymer comprising a 3-substituted $C_{4-10}$ alkene as hereinbefore described.

A prepolymerization may be employed as is well known in the art. In a typical prepolymerization less than about 5 %wt of the total polymer is produced. A prepolymerization does not count as a stage with regard to consideration of whether a process is a single or multistage process.

Preferably, however, the process of the present invention is a single stage polymerization in a slurry reactor.

Multimodal polymers may alternatively be prepared by using two or more different single site catalysts in a single reactor.

Alternatively, multisite catalyst systems, as described above, may be used to prepare multimodal polymers. In this case, in order to achieve the optimum polymer properties, especially in a single reactor system, it is preferably for the multisite catalyst system to have as high a ratio as possible between the incorporation of comonomer on a more incorporating site I and on another less incorporating site II. It has been surprisingly found that the 3-substituted $C_{4-10}$ alkene comonomer as hereinbefore described, for numerous combinations of active sites, gives a higher ratio compared to the corresponding reaction using conventional comonomers like 1-butene and 1-hexene. Utilizing 3-substituted $C_{4-10}$ alkene with a multisite catalyst system is therefore especially favorable.

Multimodal polymer may therefore be obtained in a single reactor or in a system of two or more reactors, e. g. in a staged reactor process. Preferably, however, a single reactor process (except optional prepolymerization reactors making less than 7 % of the total polymer) is used. Preferably, a multisite catalyst system comprising two or more (e. g. two) metallocene active site precursors is used.

A further possibility is to blend different interpolymers as hereinbefore described, e. g. prior to pelletization. Blending is, however, less preferable to the production of multimodal polymer, e. g. by multistage polymerization or by the use of two or more different single site catalysts in a single reactor.

Multimodal and unimodal polymers

Multimodal interpolymers as hereinbefore described, and especially those wherein the higher molecular weight polymer component A has a higher comonomer content than the lower molecular weight component B, may in some instances possess some advantages over unimodal interpolymers.

Compared to unimodal interpolymer, at the same density and at the same high ease of extrusion as regards extruder screw and die processes, a multimodal interpolymer comprising, e. g. ethylene and a 3-substituted $C_{4-10}$ alkene, may be prepared having a higher stress crack, brittle crack hoop stress failure and/or slow crack growth resistance. Such interpolymers are particularly useful for moulding and pipe applications where they give improved resistance to stress crack and slow crack propagation as well as in film applications wherein they allow improved impact resistance and often improved tear resistance.

Additionally, multimodal interpolymers as hereinbefore described also have higher melt strength, equivalent to

sagging resistance, which is an advantage in extrusion of large pipes and blow moulding of articles, especially of large pieces.

Multimodal interpolymers as hereinbefore described may also exhibit improved sealing properties (e. g. lower minimum sealing temperature, sealing temperature range broadness) compared to an unimodal polymer of the same density and ease of extrusion. This is particularly useful in the manufacture of films.

On the other hand, unimodal interpolymers as hereinbefore described often have a lower viscosity at very low shear stress compared to multimodal interpolymers. This is useful, for example, in rotomoulding processes where better mechanical strength of the product can be achieved with the same cycle time. Furthermore such interpolymers may possess a low degree of warpage making them advantageous for injection moulding.

Downstream requirements and process

When the final polymer product is obtained from a slurry reactor, the polymer is removed therefrom and the diluent preferably separated from it by flashing or filtration. The major part of the diluent and unconverted comonomer is recycled back to the polymerization reactor(s). Preferably, the polymer is then dried (e. g. to remove residues of liquids and gases from the reactor). Due to its relatively low content of catalyst system residues, preferably the polymer is not subjected to a deashing step, i. e. to washing with an alcohol, optionally mixed with a hydrocarbon liquid, or water.

In order that the polymer can be handled without difficulty, both within and downstream of the polymerization process, the polymer powder from the reactor(s) should be in a free-flowing state, preferably by having relatively large particles of high bulk density, e. g. less than 10 %wt of the polymer being smaller than 100 $\mu$m size, and the loose bulk density being higher than 300 kg/$m^3$.

Preferably, the processes from the polymerization until the pelletization extruder outlet are carried out under an inert (e. g. $N_2$) gas atmosphere.

Antioxidants are preferably added (process stabilizers and long term antioxidants) to the polymer. As antioxidant, all types of compounds known for this purpose may be used, such as sterically hindered or semi-hindered phenols, aromatic amines, aliphatic sterically hindered amines, organic phosphates and sulphur-containing compounds (e. g. thioethers).

Preferably, the antioxidants are selected from the group of organic phosphates and sterically hindered or semi-hindered phenols, i. e. phenols which comprise two or one bulky residue(s), respectively, in ortho-position to the hydroxy group, and sulphur containing compounds.

Representative examples of sterically hindered phenolic compounds include 2,6-di-tert.-butyl-4-methyl phenol; pentaerythrityl-tetrakis(3-(3',5'-di-tert.-butyl-4-hydroxyphenyl)-propion-ate; octadecyl 3-(3',5'-di-tert.-butyl-4-hydroxyphenyl)propionate; 1,3,5-trimethyl-2,4,6-tris-(3,5-di-tert.-butyl-4-hydroxyphenyl)benzene; 2,2'-thiodiethylene-bis-(3,5-di-tert.-butyl-4-hydroxyphenyl)-propionate; calcium-(3,5-di-tert.-butyl-4-hydroxy benzyl monoethyl-phosphonate); 1,3,5-tris(3',5'-di-tert.-butyl-4'-hydroxybenzyl)-isocyanurate; bis-(3,3-bis-(4'-hydroxy-3'-tert.-butylphenyl)butanoic acid)-glycolester; 4,4'-thiobis(2-tert.-butyl-5-methylphenol); 2,2'-methylene-bis(6-(1-methyl-cyclohexyl)para-cresol); n,n'-hexamethylene bis(3,5-di-tert. butyl-4-hydroxy-hydrocinnamamide; 2,5,7,8-tetramethyl-2-(4',8',12'-trimethyltridecyl)chroman-6-ol; 2,2'-ethylidenebis(4,6-di-tert.-butylphenol);1,1,3-tris(2-methyl-4-hydrosy-5-tert.-butylphenyl)butane; 1,3,5-tris(4-tert.-butyl-3-hydroxy-2,6-dimethylbenzyl)-1,3,5-triazine-2,4-,6-(1h,3h,5h)-trione; 3,9-bis(1,1-dimethyl-2-(beta-(3-tert.-butyl-4-hydroxy-5-methylphenyl)prop- ionyloxy)ethyl)-2,4,8,10-tetraoxaspiro(5,5) undecane; 1,6-hexanediyl-bis(3,5-bis (1,1-dimethylethyl)-4-hydroxybenzene-propanoate); 2,6-di-tert.-butyl-4-nonylphenol; 3,5-di-tert.-butyl-4-hydroxyhydrocinnamic acid triester with 1,3,5-tris(2-hydroxyethyl)-s-triazine-2,4,6(1h,3h,5h)-trione; 4,4'-butylidenebis(6-tert.butyl-3-methylphenol); 2,2'-methylene bis(4-methyl-6-tert.-butylphenol); 2,2-bis(4-(2-(3,5-di-t-butyl-4-hydroxyhydrocinnamoyloxy))ethoxyphenyl))propane; triethyleneglycole-bis-(3-tert.-butyl-4-hydroxy-5methylphenyl)propionate; benzenepropanoic acid, 3,5-bis(1,1-dimethylethyl)-4-hydroxy-$c_{13-15}$-branched and linear alkyl esters; 6,6'-di-tert.-butyl-2,2'-thiodi-p-cresol; diethyl((3,5-bis(1,1-dimethylethyl)-4 -hydroxyphenyl)methyl) phosphonate; 4,6-bis(octylthiomethyl)o-cresol; benzenepropanoic acid, 3,5-bis(1,1-dimethylethyl)4-hydroxy-$c_{7-9}$-branched and linear alkyl esters;1,1,3-tris[2-methyl-4-[3-(3,5-di-t-butyl-4-hydroxyphenyl)propionyloxy]-5- t-butylphenyl] butane; and a butylated reaction product ofp-cresol and dicyclopentadiene.

Among those compounds, the following phenolic-type antioxidant compounds are especially preferred to be included: pentaerythrityl-tetrakis(3-(3',5'-di-tert.-butyl-4-hydroxypheyl)-propionate; octadecyl 3-(3',5'-di-tert.-butyl-4-hydroxyphenyl)propionate; 1,3,5-trimethyl-2,4,6-tris-(3,5-di-tert.-butyl-4-hydroxyphenyl)benzene; 1,3,5-tris(3',5'-di-tert.-butyl-4'-hydroxybenzyl)isocyanurate, bis-(3,3-bis-(4'-hydroxy-3'-tert.-butylphenyl)butanoic acid)-glycolester; and 3,9-bis (1,1-dimethyl-2-(beta-(3-tert.-butyl-4-hydroxy-5-methylphenyl)propionyloxy)ethyl)-2,4,8,10-tetraoxaspiro(5,5)undecane.

Preferred organic phosphate antioxidants contain a phosphite moiety or a phosphonite moiety representative examples of preferred phosphite/phosphonite antioxidants include tris(2,4-di-t-butylphenyl)phosphite; tetrakis-(2,4-di-t-butylphenyl)-4,4'-biphenylen-di-phosphonite, bis(2,4-di-t-butylphenyl)-pentaerythrityl-di-phosphite; di-stearyl-pentaerythrityl-di-phosphite; tris-nonylphenyl phosphite; bis(2,6-di-t-butyl-4-methylphenyl)pentaerythrityl-di-phosphite; 2,2'-methylenebis(4,6-di-t-butylphenyl)octyl-phosphite; 1,1,3-tris(2-methyl-4-ditridecyl phosphite-5-t-butylphenyl)butane; 4,4'-butylidenebis(3-methyl-6-t-butylphenyl-di-tridecyl)phosphite; bis(2,4-dicumylphenyl)pentaerythritol diphosphite; bis (2-methyl-4,6-bis(1,1-dimethylethyl)phenyl)phosphorous acid ethylester; 2,2',2''-nitrilo triethyl-tris(3,3'5,5'-tetra-t-butyl-1,1'-biphenyl-2,2'-diyl)phosphite); phosphorous acid, cyclic butylethyl propandiol, 2,4,6-tri-t-butylphenyl ester; bis(2,4,6-tri-t-butylphenyl)-pentaerythrityl-di-phosphite; 2,2'-ethylidenebis(4,6-di-t-butylphenyl)fluorophosphonite, 6-(3-tert-butyl-4-hydroxy-5-methylphenyl)propoxy)-2,4,8,10-tetra-tert.but-yldibenz(d,t)(1.3.2)dioxaphosphepin; and tetrakis-(2,4-di-t-butyl-5-methyl-phenyl)-4,4'-biphenylen-di-phosphonite.

Among the above-mentioned compounds, the following phosphite/phosphonite antioxidant compounds are preferred to be included: tetrakis-(2,4-di-t-butylphenyl)-4,4'-biphenylen-di-phosphonite; bis(2,6-di-t-butyl-.4-methylphenyl)pentaerythrityl-di-phosphite; di-stearyl-pentaerythrityl-di-phosphite; and bis(2,4-dicumylphenyl)pentaerythritol diphosphite.

As antioxidant either a single compound or a mixture of compounds may be used. Particularly preferably a sterically hindered phenolic compound and a phosphite/phosphonite compound may be used in combination. The sterically hindered phenolic compound typically acts as a long term stabilizer. The phosphite/phosphonite compound typically acts as a process stabilizer.

The skilled man can readily determine an appropriate amount of antioxidant to include in the polymer. As discussed above, however, the polymers produced by the process of the present invention comprise less catalyst system residues than conventional polymers thus it is possible to add less antioxidant thereto. Thus a sterically hindered phenolic antioxidant may be used in an amount of 200 - 1000 ppmwt, more preferably 300 - 800 ppmwt, e. g. 400-600 ppmwt or about 500 ppmwt. The amount of organic phoshite/phosphonite antioxidant present in the polymer is preferably 50-500 ppmwt, more preferably 100-350 ppmwt and most preferably 150-200 ppmwt.

The above-mentioned antioxidants are particularly preferred when the amount of transition metal present in the polymer is sufficient to accelerate oxidation reactions, e. g. when the level of transition metal in the polymer is more than 1 $\mu$mol transition metal per kg polymer, more typically more than 2 $\mu$mol transition metal per kg polymer, e. g. more than 6 $\mu$mol transition metal per kg polymer. Such levels of transition metals may occur as the interpolymers are often prepared without a washing (e. g. deashing) step.

Other additives (antiblock, color masterbatches, antistatics, slip agents, fillers, UV absorbers, lubricants, acid neutralizers and fluoroelastomer and other polymer processing agents) may optionally be added to the polymer.

Prior to introduction into the plastic converter, the polymer is preferably further processed to achieve less than 10 % wt of the polymer being smaller than 2 mm in average size (weight average) and a loose bulk density of higher than 400 kg/$m^3$.

The polymer or polymer mix is preferably extruded and granulated into pellets. Prior to extrusion, the polymer preferably contacts less than 1 kg/ton, still more preferably less than 0.1 kg/ton, water or alcohol. Prior to extrusion, the polymer preferably does not contact acid.

Additives (e. g. polymer processing agents or antiblock) may be added after pelletization of the polymer. In this case the additives are preferably used as masterbatches and pellets mixed therewith before being extruded or moulded into films or articles.

## Polymer composition and properties

The amount of $C_{2-8}$ alkene (e. g. ethylene) monomer present in the interpolymer of the invention is preferably 60-99.99 %wt, still more preferably 80 - 99.9 %wt, e. g. 90 - 99.5 %wt. In interpolymers wherein the largest amount of $C_{2-8}$ alkene is propylene, preferably at least 3-10 % wt of ethylene is additionally present.

The amount of 3-substituted $C_{4-10}$ alkene (e. g. 3-methyl-1-butene) monomer present in the interpolymer of the invention is preferably 0.01 to 40 %wt, more preferably 0.1 - 20 %wt, e. g. 0.5-10 %wt, more preferably less than 7 %wt.

When it is stated herein that the amount of a given monomer present in a polymer is a certain amount, it is to be understood that the monomer is present in the polymer in the form of a repeat unit. The skilled man can readily determine what is the repeat unit for any given monomer.

The density of the interpolymer of the invention is preferably in the range 835-970 kg/$m^3$. When the $C_{2-8}$ alkene is ethylene, the density is preferably in the range 880 - 950 kg/$m^3$, still more preferably in the range 910 - 940 kg/$m^3$, e. g. 920 - 930 kg/$m^3$.

When the $C_{2-8}$ alkene is propylene, the density is preferably in the range 880-910 kg/$m^3$, still more preferably in the range 885 - 910 kg/$m^3$, e. g. 890 - 910 kg/$m^3$. When the $C_{2-8}$ alkene is propylene, the xylene solubles of the interpolymer is preferably in the range 0.5 - 30 %wt, more preferably 1-10 %wt, e. g. 3-8 %wt.

The $MFR_2$ of the interpolymer of the invention is preferably in the range 0.01 - 1000 g/10 min. When the $C_{2-8}$ alkene is ethylene, the $MFR_2$ of the polymer is preferably in the range 0.01-500 g/10 min, more preferably in the range 0.1-100 g/10 min, e. g. 0.5-10 g/10 min. When the $C_{2-8}$ alkene is propylene, the $MFR_2$ of the polymer is preferably in

the range 0.1-1000 g/10 min, more preferably in the range 1 - 150 g/10 min, e. g. 10 - 50 g/10 min.

The melting temperature of the interpolymer of the invention is preferably in the range 90-240 °C. When the $C_{2-8}$ alkene is ethylene, the melting temperature is more preferably in the range 100 - 140 °C, still more preferably in the range 110-130 °C, e.g. 115-125 °C. When the $C_{2-8}$ alkene is propylene, the melting temperature is more preferably in the range 120 - 160 °C, still more preferably in the range 130 - 155 °C, e. g. 135 - 150 °C.

The Mn of the interpolymer of the invention is preferably in the range 7000 - 500 000 g/mol. When the $C_{2-8}$ alkene is ethylene, the Mn is more preferably in the range 9000 - 250 000 g/mol, still more preferably in the range 15 000 - 150 000 g/mol, e. g. 25 000 - 70 000 g/mol. When the $C_{2-8}$ alkene is propylene, the Mn is more preferably in the range 10 000 - 100 000 g/mol, still more preferably in the range 14 000 - 70 000 g/mol, e. g. 20 000 - 50 000 g/mol.

The weight average molecular weight (Mw) of the interpolymer of the invention is preferably in the range 20 000 - 1000 000 g/mol. When the $C_{2-8}$ alkene is ethylene, the weight average molecular weight is more preferably in the range 30 000 - 700 000 g/mol, still more preferably in the range 50 000 - 150 000 g/mol, e. g. 70 000 - 130 000 g/mol. When the $C_{2-8}$ alkene is propylene, the weight average molecular weight is more preferably in the range 30 000 - 700 000 g/mol, still more preferably in the range 50 000 - 400 000 g/mol, e. g. 80 000 - 200 000 g/mol.

The Mw/Mn of the interpolymer of the invention is preferably in the range 1 - 50. When the $C_{2-8}$ alkene is ethylene, the Mw/Mn of the interpolymer is preferably in the range 1-50, more preferably in the range 2-30, e. g. 2-5. When the $C_{2-8}$ alkene is propylene, the Mw/Mn is more preferably in the range 1 - 10, more preferably in the range 2 - 10, e. g. 2 - 5. When the polymer is multimodal, each component should have $M_w/M_n$ in the range 2 - 5, more preferably in the range 2 - 4, most preferably in the range 2 - 3.5.

Preferably, the interpolymer of the present invention is unimodal.

The polymer chains of the interpolymer of the present invention may be linear in the sense that they have no measurable long chain branching. Alternatively, they may have some degree of long chain branching, which may be made e. g. by certain catalytic sites, especially metallocene such as CGC metallocenes, or by polymerization with dienes or by post reactor modification, e. g. via radicals. If present, however, long chain branching is preferably introduced during polymerization without adding extra reactants, e. g. by using a mono-Cp metallocene as discussed above or metallocenes with two Cp rings (including indenyl and fluorenyl) and having a single bridge between the Cp rings. Long chain branching gives useful rheological properties similar to broader molecular weight polymers (and thereby improved processing behavior) while in reality maintaining a relatively narrow molecular weight distribution, e. g. as measured by GPC.

The interpolymer of the present invention is obtained with high purity. Thus the interpolymer contains only very low amounts of catalyst or catalyst system residues. Preferably, the amount of total catalyst system residue in the interpolymer of the invention is less than 4000 ppm wt, still more preferably less than 2000 ppm wt, e. g. less than 100 ppm wt. By the total catalyst system is meant the active site precursor, activator, carrier or other catalyst particle construction material and any other components of the catalyst system.

Transition metals are harmful in films in far lower concentrations since they act as accelerators for degradation of the polymer by oxygen and temperature, giving discoloration and reducing or destroying mechanical properties. A particular advantage of the process of the present invention is that it yields polymers containing very low amounts of transition metal. Polymers produced by the process of the invention preferably comprise less than 100 $\mu$mol transition metal per kg polymer, more preferably less than 50 $\mu$mol transition metal per kg polymer, still more preferably less than 25 $\mu$mol transition metal per kg polymer, e. g. less than 15 $\mu$mol transition metal per kg polymer.

Applications

The interpolymer of the present invention is therefore useful in a wide range of applications, especially considering it has not been subjected to a deashing step. It may be used, for example, in medical applications or for the manufacture of packaging for food wherein it is important that the amount of impurities present in the polymer is minimized.

The interpolymer may also be used in moulding as well as in pipe applications.

Moulding

The interpolymer of the present invention may be advantageously used in moulding applications. It may, for example, be used in blow moulding, injection moulding or rotomoulding.

Representative examples of blow moulded articles that may be prepared include bottles or containers, e. g. having a volume of 200 ml to 300 liters. Preferred interpolymers for blow moulding have a density of more than 945 g/dm$^3$, e. g. 945-970 g/dm$^3$. Preferred interpolymers for blow moulding have a $MFR_{21}$ of 1- 40 g/10 min.

Representative examples of injection moulded articles that may be prepared include boxes, crates, thin walled packaging, plastic housing, buckets, toys, racks, rail pads, trash cans, caps and closures. Preferred interpolymers for injection moulding have a density of more than 955 g/dm$^3$, e. g. 955 - 970 g/dm$^3$. Preferred interpolymers for injection

moulding have a $MFR_2$ of 0.5-100 g/10 min.

Representative examples of rotomoulded articles that may be prepared include water tanks, bins, containers and small boats. Preferred interpolymers for rotomoulding have a density of 915-950 g/$dm^3$. Preferred interpolymers for rotomoulding have a $MFR_2$ of 0.5 - 5 g/10 min.

Pipe

The interpolymer of the present invention may be advantageously used in pipe applications. Preferably, it is used in HDPE pipes, e. g. according to PE80 or PE100 standards. The pipes may be used e. g. for water and gas distribution, sewer, wastewater, agricultural uses, slurries, chemicals etc.

Preferred interpolymers for use in pipe applications have a density of 930 - 960 g/$dm^3$, preferably 940 - 954 g/$dm^3$, more preferably 942 - 952 g/$dm^3$. Preferred interpolymers for use in pipe applications also have a $MFR_5$ of 0.1-0.5 g/10 min, more preferably 0.15 - 0.4 g/10 min. Preferred interpolymers for use in pipe applications have a $MFR_{21}/MFR_5$ of 14 - 45, more preferably 16 -37, most preferably 18-30. Preferred interpolymers for use in pipe applications have a comonomer content of 0.8 - 5 %wt, more preferably 1 - 3 %wt. If used with added carbon black, the density of the interpolymer with the carbon black is preferably 940-970 g/$dm^3$, more preferably 948-966 g/$dm^3$, still more preferably 953 - 963 g/$dm^3$.

If the interpolymer comprises of more than one component it preferably comprises:

A. A polymer component(s) which is 25-65 %wt, more preferably 35-60 % wt of the interpolymer and comprises less than 1 % wt of comonomer, more preferably less than 0.5 % wt comonomer and has a $MFR_2$ of 50-5000 g/10 min, more preferably 100-1000 g/10 min.

B. A polymer component(s) which is 25-65 %wt, more preferably 35-60 %wt of the interpolymer and comprises more than 0.5 % wt of comonomer, more preferably more than 1 %wt and has a $MFR_2$ of 50-5000 g/10 min, more preferably 100-1000 g/10 min.

Having generally described this invention, a further understanding can be obtained by reference to certain specific examples which are provided herein for purposes of illustration only, and are not intended to be limiting unless otherwise specified.

EXAMPLES

The present invention will now be described with reference to the following nonlimiting examples wherein:

Figure 1 is a plot of activity coefficient versus polyethylene density; and
Figure 2 is a plot of comonomer content versus polyethylene density.

Determination Methods

Unless otherwise stated, the following parameters were measured on polymer samples as described in the Tables that follow below.

$MFR_2$, $MFR_5$ and $MFR_{21}$ were measured according to ISO 1133 at loads of 2.16, 5.0, and 21.6 kg respectively. The measurements were at 190 °C for polyethylene interpolymers and at 230 °C for polypropylene interpolymers.

Molecular weights and molecular weight distribution, Mn, Mw and MWD were measured by Gel Permeation Chromatography (GPC) according to the following method: The weight average molecular weight Mw and the molecular weight distribution (MWD = Mw/Mn wherein Mn is the number average molecular weight and Mw is the weight average molecular weight) is measured by a method based on ISO 16014-4:2003. A Waters 150CV plus instrument, equipped with refractive index detector and online viscosimeter was used with 3 x HT6E styragel columns from Waters (styrene-divinylbenzene) and 1,2,4-trichlorobenzene (TCB, stabilized with 250 mg/L 2,6-Di tert butyl-4-methyl-phenol) as solvent at 140 °C and at a constant flow rate of 1 mL/min. 500 $\mu$l of sample solution were injected per analysis. The column set was calibrated using universal calibration (according to ISO 16014-2:2003) with 15 narrow molecular weight distribution polystyrene (PS) standards in the range of 1.0 kg/mol to 12 000 kg/mol. These standards were from Polymer Labs and had Mw/Mn from 1.02 to 1.10. Mark Houwink constants were used for polystyrene and polyethylene (K:9.54 x $10^{-5}$ dL/g and a: 0.725 for PS and K: 3.92 x $10^{-4}$ dL/g and a: 0.725 for PE). All samples were prepared by dissolving 0.5-3.5 mg of polymer in 4 mL (at 140 °C) of stabilized TCB (same as mobile phase) and keeping for 3 hours at 140 °C and for another 1 hour at 160 °C with occasional shaking prior to sampling into the GPC instrument.

Melting temperature was measured according to ISO 11357-1 on Perkin Elmer DSC-7 differential scanning calorimetry. Heating curves were taken from -10 °C to 200 °C at 10 °C/min. Hold for 10 min at 200 °C. Cooling curves

were taken from 200 °C to -10 °C at 10 °C per min. Melting temperature was taken as the peak of the endotherm of the second heating.

Comonomer content (wt %) was determined based on Fourier transform infrared spectroscopy (FTIR) determination calibrated with C13-NMR.

Density of materials is measured according to ISO 1183:1987 (E), method D, with isopropanol-water as gradient liquid on pieces from compression moulded plaques. The cooling rate of the plaques when crystallizing the samples was 15 C/min. Conditioning time was 16 hours.

Xylene solubles were determined according to ISO-6427, annex B1992.

The activity coefficient for the bench scale polymerization runs is calculated by the following equation:

$$Activity_coefficient(kg/(g, bar, h) = \frac{(Yield_of_polymer_(kg))}{(Catalyst_amount_(g)) \cdot (Partial_pressure_of_ethylene_(bar)) \cdot (Polymerisation_time-(h))}$$

For continuous polymerizations, the activity coefficient is analogous by using production rate of polymer instead of yield of product and feed rate of catalyst system instead of amount fed catalyst, and using the average residence time in the continuous reactor.

Example 1. Use of 3-methyl-but-1-ene in single stage polymerization

Raw materials

The catalyst system ((n-Bu-Cp)$_2$ HfCl$_2$ and MAO supported on calcined silica) was prepared essentially according to example 1 of WO 98/02246, except Hf was used as transition metal instead of Zr and 600 °C was used as calcination (dehydration) temperature.

Ethylene: Polymerization grade
Hydrogen: Grade 6.0
1-hexene: From Sasol. Stripped of volatiles and dried with 13 X molecular sieve.
1-octene: Polymerization grade (99.5 %). N2 bubbled and dried with 13 X molecular sieve.
3-methyl-1-butene: Produced by Evonik Oxeno. Purity > 99.7%. Dried with 13 X molecular sieve and stripped of volatiles.
Isobutane: Polymerization grade

Slurry Polymerization method

Polymerization was carried out in an 8 liter reactor fitted with a stirrer and a temperature control system. The same comonomer feeding system was used for all runs. The procedure consisted of the following steps:

1. Catalyst system was fed into the reactor.
2. 3.8 liter isobutane was added to the reactor and stirring started (300 rpm).
3. The reactor was heated to a polymerization temperature of 85 °C.
4. Ethylene, comonomer and hydrogen were added into the reactor. The pressure was maintained at the required pressure by the supply of ethylene via a pressure control valve. Hydrogen had been previously mixed with ethylene in the ethylene supply cylinder. Comonomer was also added continuously into the reactor, proportional to the ethylene flow.
5. The consumption of monomer was followed. When 1500 - 2000 g polymer had been produced, the polymerization was stopped by venting the reactor of volatiles and reducing the temperature.
6. The polymer was further dried in a vacuum oven.

Further details of the polymerization procedure and details of the resulting interpolymers are provided in Table 1 and in Figures 1 and 2.

Table 1

| Run | | 1 | 2 | 3 | 4 | 5 | 6 | 7 | 8 | 9 | 10 |
|---|---|---|---|---|---|---|---|---|---|---|---|
| POLYMERIZATION | | | | | | | | | | | |
| Catalyst feed | g | 1.89 | 1.65 | 1.56 | 1.64 | 1.66 | 2.14 | 2.18 | 2.36 | 2.38 | 2.34 |
| Total pressure | bar g | 22.7 | 22.7 | 22.7 | 19.7 | 19.7 | 22.7 | 19.7 | 19.7 | 19.7 | 19.7 |
| Hydrogen in ethylene feed | molppm | 640 | 640 | 620 | 620 | 620 | 620 | 620 | 620 | 620 | 620 |
| Comonomer type* | | M1B | M1B | M1B | M1B | M1B | 1-Hexene | 1-Hexene | 1-Hexene | 1-Hexene | 1-Octene |
| Comonomer start | ml | 50 | 104 | 166 | 25 | 100 | 31 | 50 | 50 | 50 | 60 |
| Comonomer continuous addition to feed | g/100 g ethylene | 6 | 13 | 24 | 28 | 25 | 5 | 7 | 8 | 10 | 11 |
| Run time | min | 43 | 45 | 40 | 47 | 44 | 51 | 69 | 79 | 68 | 76 |
| Yield | g | 1920 | 1970 | 1670 | 1760 | 1790 | 1810 | 1600 | 1800 | 1680 | 1800 |
| Activity coefficient | g PE/(g cat, h, bar) | 197 | 221 | 223 | 326 | 350 | 138 | 152 | 138 | 148 | 145 |
| | | | | | | | | | | | |
| POLYMER ANALYSES | | | | | | | | | | | |
| $MFR_2$ | g/10 min | 1.5 | 1.6 | 1.6 | 1.5 | 1.2 | 1.7 | 1.1 | 1.9 | 1.5 | 1.6 |
| Mw | g/mol | 105000 | 95000 | 95000 | 105000 | 105 000 | 95 000 | 105000 | 95000 | 95000 | 95 000 |
| Mn | g/mol | 45 000 | 43 000 | 41 000 | 47 000 | 50 000 | 43 000 | 46 000 | 41 000 | 44 000 | 42000 |
| Mw/Mn | - | 2.3 | 2.3 | 2.4 | 2.2 | 2.1 | 2.3 | 2.3 | 2.3 | 2.2 | 2.3 |
| Melting temp. (DSC) | °C | 126.3 | 122.5 | 121.2 | 117.4 | 118.2 | 122.6 | 117.5 | 119.6 | 116.8 | 119.6 |
| Comon. content (FT-IR) | wt % | 1.4 | 2.3 | 3.4 | 6.0 | 5.5 | 3.1 | 5.0 | 5.4 | 6.3 | 6.6 |

(continued)

| POLYMER ANALYSES | | | | | | | | | | | |
|---|---|---|---|---|---|---|---|---|---|---|---|
| Density PE | kg/dm3 | 937 | 931.8 | 928.4 | 918.5 | 919 | 931 | 922 | 922 | 919 | 920.8 |
| *M1B: 3-methyl-1-butene | | | | | | | | | | | |

The results in Table 1 show that for the production of comparable ethylene interpolymers the use of 3-methyl-1-butene in conjunction with a supported catalyst system comprising a single site catalyst allows a much higher catalytic activity to be achieved than when 1-hexene or 1-octene is used as comonomer. This can be seen, for example, by comparing the results obtained in runs 2 and 6 (comparative).

| | Run 2 | Run 6 |
|---|---|---|
| Comonomer | 3-methyl but-1-ene | 1-hexene |
| Catalyst activity coefficient | 221 | 152 |
| $MFR_2$ | 1.6 | 1.7 |
| Mw | 95 000 | 95 000 |
| Mn | 43000 | 43 000 |
| Mw/Mn | 2.3 | 2.3 |
| DSC, Melting Temp. | 122.5 | 122.6 |
| Comon. content (FT-IR) | 2.3 | 2.3 |
| Density PE | 931.8 | 931 |

Some of the results in Table 1 are also presented in Figures 1 and 2.

Figure 1, a plot of activity coefficient versus polyethylene density, shows that in order to produce a polyethylene of density 930 kg/$m^3$, the polymerization using a particulate catalyst system comprising a single site catalyst and 3-methyl-1-butene as comonomer is about 1.5 times as efficient compared to using 1-hexene or 1-octene as comonomer. While at a density of 920 kg/$m^3$, 3-methyl-1-butene as comonomer is about 2 times as efficient compared to using 1-hexene or 1-octene as comonomer.

Moreover Figure 2, a plot of comonomer content versus polyethylene density, surprisingly shows that in order to produce a polyethylene of a given density, about 20 % less 3-methyl-1-butene needs to be incorporated therein than 1-hexene or 1-octene. This means that to produce one ton of polymer by a catalyst system as herein described, using 3-methyl-1-butene versus 1-hexene or 1-octene, results in using more ethylene and less comonomer. Since the cost per ton of comonomer is always very much higher than that of ethylene, this means that there is a potential for significant cost savings on monomer/comonomer by using 3-methyl-1-butene as comonomer.

In addition, this means that the increase in catalyst system activity observed in Figure 1 translates directly into a need for less catalyst system for the production of a given polyethylene interpolymer having particular properties.

Example 2. Use of 3-methyl-but-1-ene in staged polymerization

Raw materials and methods

The same raw materials as in example 1 were used when applicable, including the same catalyst.

Polymerization was carried out in an 8 liter reactor fitted with a stirrer and a temperature control system. The same comonomer feeding system was used for all runs. The procedure consisted of the following steps:

1. Catalyst system was fed into the reactor.
2. 3.8 liter isobutane was added to the reactor and stirring started (300 rpm).
3. The reactor was heated to the desired polymerization temperature of 85 °C.
4. Ethylene, comonomer and hydrogen were added into the reactor. The pressure was maintained at the required pressure by the supply of ethylene via a pressure control valve. Hydrogen had been previously mixed with ethylene in the ethylene supply cylinder. Comonomer was also added continuously into the reactor, proportional to the ethylene flow.
5. The consumption of monomer was followed. When about 1200 g polymer had been produced, the reactor was vented, stirring reduced to 30 rpm, the polymer dried with $N_2$ at 70 °C and 40 g polymer sample removed.
6. The temperature was adjusted to the desired polymerization temperature. 400 ml propane was added and stirring adjusted to 280 rpm.
7. Ethylene, comonomer and hydrogen were added into the reactor. The pressure was maintained at the desired pressure by supply of ethylene via a pressure control valve. Hydrogen had been previously mixed with ethylene in the ethylene supply cylinder. Comonomer was also added continuously into the reactor, proportional to the ethylene

flow.

8. The polymerization was stopped by venting the reactor of volatiles and reducing the temperature.
9. The polymer was further dried at 70 °C in the reactor with $N_2$ flow.

Further details of the polymerization procedure and details of the resulting interpolymers are provided in Table 2.

Results

Table 2

| Run no | | 1 | 2 |
|---|---|---|---|
| **POLYMERIZATION STAGE 1 - SLURRY** | | | |
| Catalyst feed | g | 2.91 | 1.93 |
| Total pressure | bar g | 21 | 21 |
| Reactor temperature | °C | 85 | 85 |
| Hydrogen in ethylene feed | molppm | 3550 | 3550 |
| Comonomer type | - | 1-hexene | 3-methyl-1-butene |
| Comonomer start | ml | 30 | 50 |
| Feed ratio comonomer/ethylene | g/g | 0.09 | 0.27 |
| Fraction in stage 1 | wt% | 50 | 50 |
| Yield in stage 1 | g | 1190 | 1180 |
| Run time | min | 47 | 31 |
| Activity coefficient | g PE/(g cat, h, bar) | 245 | 368 |
| $MFR_2$ | g/10 min | 170 | 150 |
| Density | g/dm$^3$ | 937 | 941 |
| | | | |
| **POLYMERIZATION STAGE 2 - GAS PHASE** | | | |
| Total pressure | bar g | 21 | 21 |
| Reactor temperature | °C | 70 | 70 |
| Hydrogen in ethylene feed | molppm | 300 | 300 |
| Comonomer type | - | 1-hexene | 3-methyl-1-butene |
| Comonomer start | ml | 30 | 50 |
| Feed ratio comonomer/ethylene | g/g | 0.09 | 0.29 |
| Fraction in stage 2 | wt% | 50 | 50 |
| Yield in stage 2 only | g | 1150 | 1140 |
| Run time | min | 66 | 33 |
| Activity coefficient | g PE/(g cat, h, bar) | 169 | 334 |
| | | | |
| **TOTAL RUN POLYMER - POWDERS** | | | |
| Fraction made in stage 2 | wt% | 50 | 50 |

(continued)

| TOTAL RUN POLYMER - POWDERS | | | |
|---|---|---|---|
| $MFR_2$ | g/10 min | 2.1 | 1 |
| Density | $g/dm^3$ | 924 | 920 |

The results in Table 2 show that when comparing 3-methyl-1-butene and 1-hexene in a staged process of one slurry and one gas phase polymerization stage to produce relatively equal products, 3-methyl-1-butene is superior on activity in the slurry as well as in the gas phase stage. Thus multistage polymerization can be advantageously carried out using 3-substituted $C_{4-10}$ alkene, including cases where a slurry phase polymerization is followed by a gas phase polymerization.

Numerous modifications and variations on the present invention are possible in light of the above teachings. It is therefore to be understood that within the scope of the appended claims, the invention may be practiced otherwise than as specifically described herein.

## Claims

1. A process for the preparation of an alkene interpolymer, comprising:

    polymerizing at least one 3-substituted $C_{4-10}$ alkene and at least one $C_{2-8}$ alkene in a slurry polymerization using a particulate catalyst system comprising a single site catalyst.

2. The process as claimed in claim 1, wherein said $C_{2-8}$ alkene is ethylene or propylene.

3. The process as claimed in claim 1 or 2, wherein said 3-substituted $C_{4-10}$ alkene is a compound of formula (I)

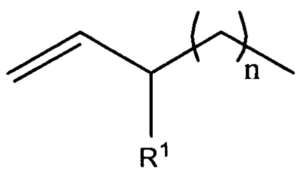

(I)

wherein $R^1$ is a substituted or unsubstituted $C_{1-6}$ alkyl group and n is an integer between 0 and 6.

4. The process as claimed in claim 3, wherein said 3-substituted $C_{4-10}$ alkene is 3-methyl-1-butene.

5. The process as claimed in claims 1 to 4, wherein said catalyst system comprises a metallocene.

6. The process as claimed in claims 1 to 6, wherein said catalyst system comprises a carrier.

7. The process as claimed in claims 1 to 6, which is continuous.

8. The process as claimed in claims 1 to 7, wherein the productivity based on a total dry weight of the catalyst system is at least 1 ton polymer per kg solid catalyst system.

9. The process as claimed in claims 1 to 8, wherein said alkene interpolymer comprises 3-substituted $C_{4-10}$ alkene comonomer in an amount of 0.01-40 wt% based on a total weight of the interpolymer.

10. The process as claimed in claims 1 to 8, wherein said alkene interpolymer comprises $C_{2-8}$ alkene monomer in an amount of at least 60 wt% based on a total weight of the interpolymer.

11. The process as claimed in claims 1 to 10, wherein said alkene interpolymer has a weight average molecular weight of 20 000 to 900 000 g/mol as measured according to ISO 16014-4:2003.

**12.** The process as claimed in claims 1 to 11, wherein said alkene interpolymer has a MFR2 of 0.01-5000 g/10 min as measured according to ISO1133.

**13.** The process as claimed in claims 1 to 12, wherein said alkene interpolymer is unimodal.

**14.** The process as claimed in claims 1 to 13, wherein said at least 3-substituted $C_{4-10}$ alkene and said at least one $C_{2-8}$ alkene are different from one another.

**15.** An alkene interpolymer obtained by the process as claimed in claim 1.

**16.** The alkene interpolymer as claimed in claim 15, comprising:

less than 1000 ppm by weight of the particulate catalyst system or residues therefrom.

**Patentansprüche**

**1.** Verfahren zur Herstellung eines Alken-Mischpolymers, bei dem man:

mindestens ein 3-substituiertes $C_{4-10}$-Alken und mindestens ein $C_{2-8}$-Alken in einer Suspensionspolymerisation unter Verwendung eines teilchenförmigen Katalysatorsystems, das einen Single-Site-Katalysator umfasst, polymerisiert.

**2.** Verfahren nach Anspruch 1, bei dem es sich bei dem $C_{2-8}$-Alken um Ethylen oder Propylen handelt.

**3.** Verfahren nach Anspruch 1 oder 2, bei dem es sich bei dem 3-substituierten $C_{4-10}$-Alken um eine Verbindung der Formel (I)

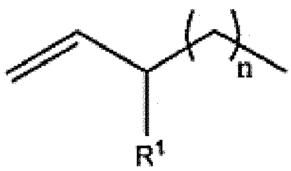

(I)

worin $R^1$ für eine substituierte oder unsubstituierte $C_{1-6}$-Alkylgruppe steht und n für eine ganze Zahl zwischen 0 und 6 steht, handelt.

**4.** Verfahren nach Anspruch 3, bei dem es sich bei dem 3-substituierten $C_{4-10}$-Alken um 3-Methyl-1-buten handelt.

**5.** Verfahren nach einem der Ansprüche 1 bis 4, bei dem das Katalysatorsystem ein Metallocen umfasst.

**6.** Verfahren nach einem der Ansprüche 1 bis 5, bei dem das Katalysatorsystem einen Träger umfasst.

**7.** Verfahren nach einem der Ansprüche 1 bis 6, das kontinuierlich ist.

**8.** Verfahren nach einem der Ansprüche 1 bis 7, bei dem die Produktivität auf der Basis des Gesamttrockengewichts des Katalysatorsystems mindestens 1 Tonne Polymer pro kg festes Katalysatorsystem beträgt.

**9.** Verfahren nach einem der Ansprüche 1 bis 8, bei dem das Alken-Mischpolymer 3-substituiertes $C_{4-10}$-Alken-Comonomer in einer Menge von 0,01-40 Gew.-%, bezogen auf das Gesamtgewicht des Mischpolymers, umfasst.

**10.** Verfahren nach einem der Ansprüche 1 bis 8, bei dem das Alken-Mischpolymer $C_{2-8}$-Alken-Monomer in einer Menge von mindestens 60 Gew.-%, bezogen auf das Gesamtgewicht des Mischpolymers, umfasst.

**11.** Verfahren nach einem der Ansprüche 1 bis 10, bei dem das Alken-Mischpolymer ein gemäß ISO 16014-4:2003 gemessenes gewichtsmittleres Molekulargewicht von 20.000 bis 900.000 g/mol aufweist.

**12.** Verfahren nach einem der Ansprüche 1 bis 11, bei dem das Alken-Mischpolymer eine gemäß ISO 1133 gemessene MFR2 von 0,01-5000 g/10 min aufweist.

**13.** Verfahren nach einem der Ansprüche 1 bis 12, bei dem das Alken-Mischpolymer unimodal ist.

**14.** Verfahren nach einem der Ansprüche 1 bis 13, bei dem das mindestens eine 3-substituierte $C_{4-10}$-Alken und das mindestens eine $C_{2-8}$-Alken voneinander verschieden sind.

**15.** Alken-Mischpolymer, erhalten durch das Verfahren nach Anspruch 1.

**16.** Alken-Mischpolymer nach Anspruch 15, umfassend:

weniger als 1000 Gew.-ppm des teilchenförmigen Katalysatorsystems oder von Rückständen davon.

**Revendications**

**1.** Procédé pour la préparation d'un interpolymère d'alcène, comprenant :

la polymérisation d'au moins un alcène en $C_{4-10}$ 3-substitué et au moins un alcène en $C_{2-8}$ dans une polymérisation en suspension concentrée en utilisant un système de catalyseur particulaire comprenant un catalyseur monosite.

**2.** Procédé selon la revendication 1, dans lequel ledit alcène en $C_{2-8}$ est éthylène ou propylène.

**3.** Procédé selon la revendication 1 ou 2, dans lequel ledit alcène en $C_{4-10}$ 3-substitué est un composé de formule (I)

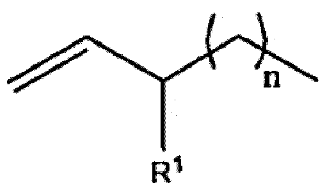

(I)

dans lequel $R^1$ est un groupe alkyle en $C_{1-6}$ substitué ou non substitué et n est un entier compris entre 0 et 6.

**4.** Procédé selon la revendication 3, dans lequel ledit alcène en $C_{4-10}$ 3-substitué est 3-méthyl-1-butène.

**5.** Procédé selon les revendications 1 à 4, dans lequel ledit système de catalyseur comprend un métallocène.

**6.** Procédé selon les revendications 1 à 5, dans lequel ledit système de catalyseur comprend un support.

**7.** Procédé selon les revendications 1 à 6, qui est continu.

**8.** Procédé selon les revendications 1 à 7, dans lequel la productivité basée sur le poids sec total du système de catalyseur est d'au moins 1 tonne de polymère par kg de système de catalyseur solide.

**9.** Procédé selon les revendications 1 à 8, dans lequel ledit interpolymère d'alcène comprend un comonomère d'alcène en $C_{4-10}$ 3-substitué en une quantité de 0,01 à 40 % en poids sur la base d'un poids total de l'interpolymère.

**10.** Procédé selon les revendications 1 à 8, dans lequel ledit interpolymère d'alcène comprend un monomère alcène en $C_{2-8}$ en une quantité d'au moins 60 % en poids sur la base du poids total de l'interpolymère.

**11.** Procédé selon les revendications 1 à 10, dans lequel ledit interpolymère d'alcène a un poids moléculaire moyen en poids de 20 000 à 900 000 g/mole tel que mesuré selon l'ISO 16014-4:2003.

**12.** Procédé selon les revendications 1 à 11, dans lequel ledit interpolymère d'alcène a un MFR2 de 0,01 à 5000 g/10

min tel que mesuré selon l'ISO 1133.

13. Procédé selon les revendications 1 à 12, dans lequel ledit interpolymère d'alcène est unimodal.

14. Procédé selon les revendications 1 à 13, dans lequel ledit au moins un alcène en $C_{4-10}$ 3-substitué et ledit au moins un alcène en $C_{2-8}$ sont différents l'un de l'autre.

15. Interpolymère d'alcène obtenu par le procédé selon la revendication 1.

16. Interpolymère d'alcène selon la revendication 15, comprenant :

moins de 1000 ppm en poids du système de catalyseur particulaire ou de résidus de celui-ci.

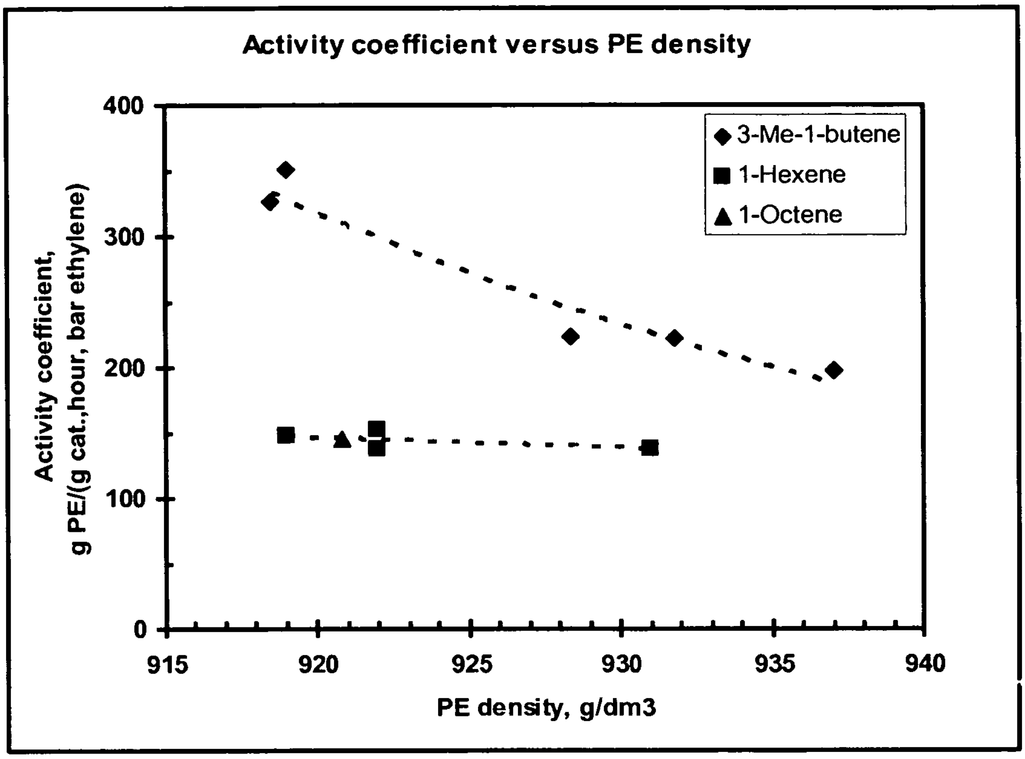


Figure 1

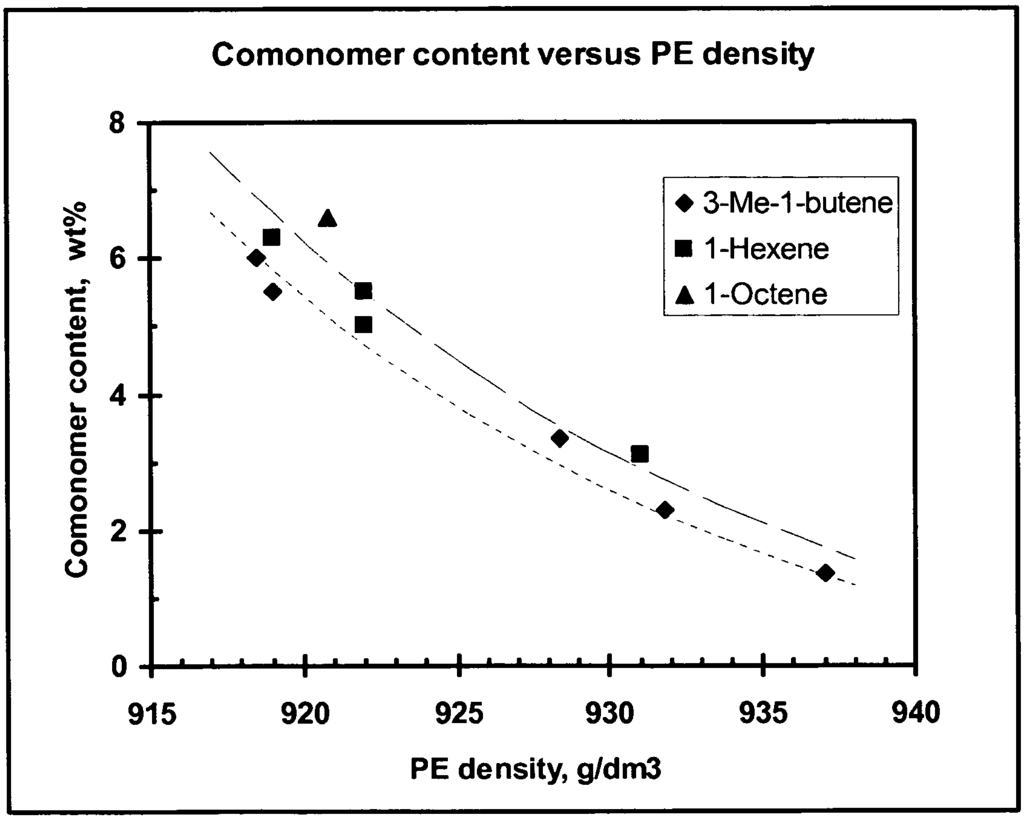


Figure 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2008006636 A
- EP 1197501 A
- WO 2008003020 A
- WO 2008006633 A
- WO 9802246 A
- EP 520732 A
- US 7312283 B
- US 20030022998 A
- US 5880241 A
- US 6787608 B
- US 6350829 B
- EP 279863 A
- WO 9323439 A
- EP 793678 A
- WO 9600245 A
- WO 9729134 A
- WO 9109882 A
- WO 9731038 A
- EP 810344 A
- EP 792297 A


### Non-patent literature cited in the description


- **G.J.P. BRITOVSEK et al.** The Search for New-Generation Olefin Polymerization Catalysts: Life beyond Metallocenes. *Angew. Chemie Int. Ed.,* 1999, vol. 38, 428
- **H. MAKIO et al.** FI Catalysts: A New Family of High Performance Catalysts for Olefin Polymerization. *Advanced Synthesis and Catalysis,* 2002, vol. 344, 477